# EUROPEAN PATENT SPECIFICATION

(11) **EP 2 669 152 B1**
(45) Date of publication and mention of the grant of the patent: **26.04.2017**
(21) Application number: 12170194.0
(22) Date of filing: 31.05.2012
(51) Int. Cl.: B62D 33/067

(54) **System for inhibiting the tilt of a cabin**
System zur Verhinderung des Kippens eines Fahrerhauses
Système empêchant le basculement d'une cabine

(43) Date of publication of application: 04.12.2013
(73) Proprietor: IVECO S.p.A., 10156 Torino (IT)
(72) Inventor: Basile, Salvatore, 10040 LEINI' (IT)
(74) Representative: Franzolin, Luigi

(56) References cited:
- EP-A1- 0 174 396
- WO-A1-2006/038793
- GB-A- 2 007 604

## Description

### Application field of the invention

The present invention refers to the field of the industrial vehicles with tilt cab. More precisely, the present invention refers to those vehicles having manual operation means for the cabin tilt. In the following, the expression manual tilt means will refer to kinematic or hydraulic systems whose actuation force is generated by an operator, for example by means of a handle, a wrench or a lever.

### Description of the prior art

Devices for inhibiting the cabin tilt are known for those vehicles whose tilt means are electrically driven. They may include the use of electric or electro-hydraulic systems.

A first reason why a control of the cabin tilt is desired is related to the fact that it allows to reach the engine compartment of the vehicle and other delicate parts.

Another reason why a control of the cabin tilt is desired is related to the radiator grill of the vehicle.

In a lot of vehicles, indeed, the radiator grill should be opened prior to the cabin tilt, in order to avoid damages to the grill.

Electrically driven tilt means allow to avoid the cabin tilt with the radiator grill closed by simply including a sensor to detect the prior opening of the radiator grill, inhibiting the cabin tilt if it is closed.

In vehicles with manually operated tilt means such solution cannot be applied.

EP0174396 shows a solution where the hydraulic circuit feeding an hydraulic actuator for tilting the cab, is discharged according to the condition of the gear box and/or the parking brake.

WO2006038793 shows a mechanically operable shut-off, which, in closed state, prevents the flow of the hydraulic fluid under working pressure to the cab-tilting mechanism. This document discloses the preamble of independent claim 1.

### Summary of the invention

Therefore the aim of the present invention is to overcome all the aforementioned drawbacks and to provide a device for inhibiting the cabin tilt suitable to avoid the cabin tilt in those vehicle having at least manual tilt means.

It is object of the present invention a system for inhibiting the cabin tilt, according to claim 1.

Another aim of the present invention is to provide a method for controlling an inhibition system described here.

A further aim of the present invention is to provide a vehicle which is not affected by the problems of the prior art.

The present invention is described more fully in the claims, which are an integral part of the present description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 (prior art) shows an industrial vehicle according to the prior art, having a tilt cab whose radiator grill is open;
figure 2 and 3 show two hydraulic pumps equipped with the device according to the present invention, in condition of consent and of inhibition, respectively;
figures 4 and 5 show other hydraulic pumps, whose connection system of the actuation lever is different from the jack of the previous figures 2 and 3; also these figures show a condition of consent and a condition of inhibition, respectively;
figure 6 shows an outline of a circuit diagram of the system that is object of the present invention.

In the figures the same reference numbers and letters identify the same elements or components.

### Detailed description of preferred embodiments of the invention

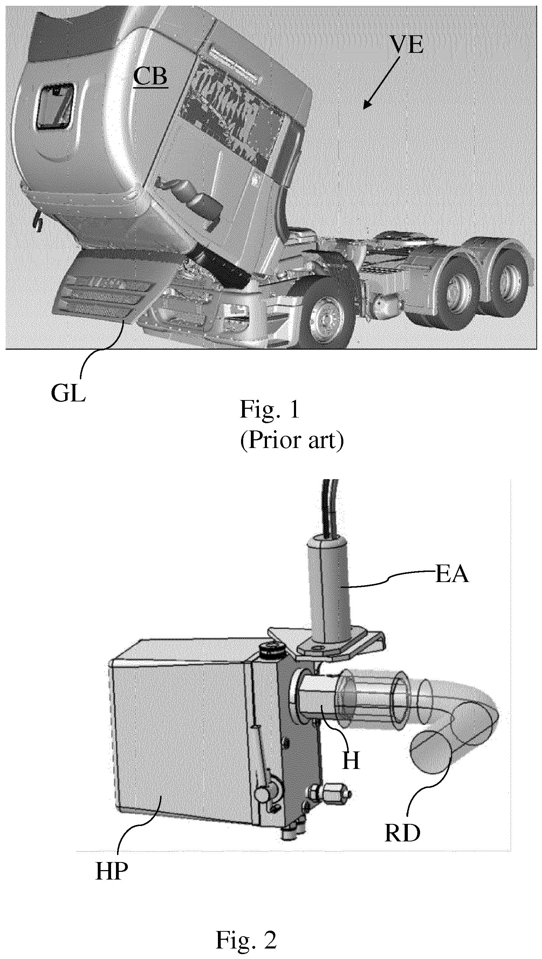

Figure 1 of the prior art shows a vehicle VE whose cabin CB is forward tilted in order to free the access to the engine compartment, below the cabin. This situation is frequent for all, and not only, tractors of semitrailers.

It can be noted that the radiator grill is open. The same figure shows also that, if the radiator grill was not open, the cabin tilt would broke it.

Usually, in order to operate the manual tilt of the cabin CB, a hydraulic system is present, comprising at least a hydraulic pump HP.

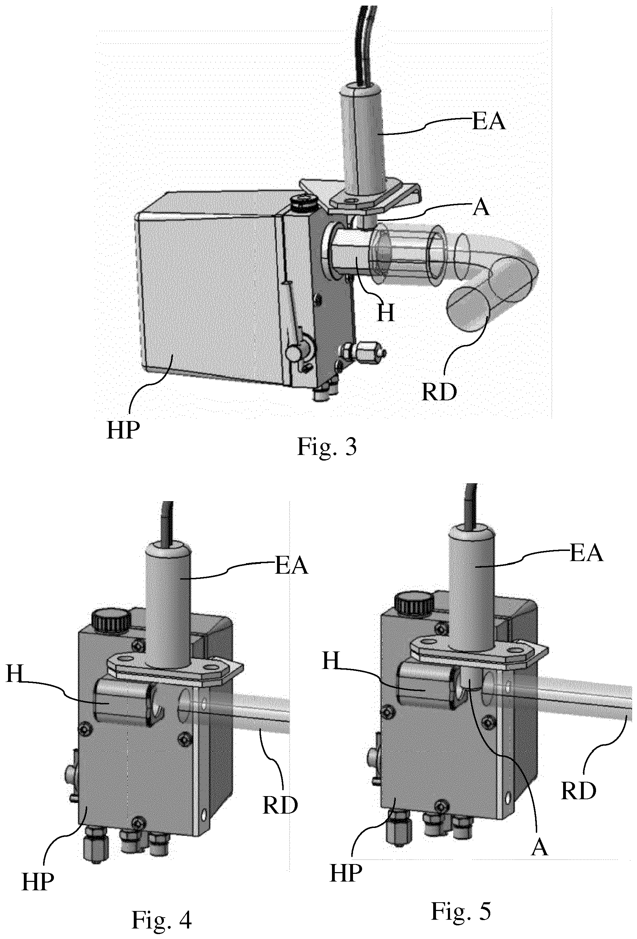

In figures 2 and 3, such hydraulic pump has a hub H with a hexagonal section, suitable to be engaged by a tubular-shaped L-wrench, whose coupling is compatible with the hub H, namely with the mobile part of the pump. An alternate up and down action of the L-wrench activates the pump HP which compresses a fluid in a hydraulic piston (not shown) which determines the cabin tilt. Further details on this operation are not necessary, since it belongs to the prior art.

According to the present invention, an electric actuator EA, preferably of the linear type, is operatively coupled with the hub H, so that its axis A, in extended position, interferes with the movement of the hub H of the hydraulic pump HP.

Thus, according to this first alternative embodiment of the present invention, the interference provided by the electric actuator EA defines an inhibition of the possibility of manually actuating the hydraulic pump. In particular, the axis A prevents any movement of the mobile actuation part of the pump, namely the hub H. More precisely, the end of the axis A adheres to one of the faces of the hub H having a square or a hexagonal section, preventing any rotation. In this regard, the axis A of the actuator may be appropriately flanged in order to comply with the mobile part H of the pump and prevent any actuation movement of the pump.

In the alternative embodiment shown in figures 4 and 5, a hydraulic pump is shown having a hollow hub, which is engaged by a lever L, having an end compatible with the recess of the recess of the hub.

An alternate up and down action of the lever L activates the pump HP which compresses a fluid in a hydraulic piston (not shown) which determines the cabin tilt. Further details on this operation are not necessary, since it belongs to the prior art.

According to the present invention, an actuator EA, preferably of the linear type, is arranged in the proximity of the hub H or on the hub, so that its axis A, in extended position, interferes with the engagement of the lever L in the hub H of the hydraulic pump HP.

Thus, according to this second alternative embodiment of the present invention, the interference provided by the electric actuator EA defines an inhibition of the possibility of manually actuating the hydraulic pump. In particular, the axis A inhibits even the possibility to engage the lever or the wrench acting on the hub H of the hydraulic pump HP.

Advantageously, the present invention shows lock means which inhibit, by mechanical interference, the mobile actuation part of the pump.

In the figures, the actuator is adjacent to the pump, but it can also be made in a single piece with the hub H. In this case, the mobile part may be, for example, a tooth which can be driven out of the hub, see figures 2 and 3, or in the recess of the hub, see figures 4 and 5.

The electric actuator is preferably of the linear type, namely with its axis A that can move between a retracted position and an extended position, but it may also be of the rotary type, equipped with an appropriate cam, which interferes with respect to the hub H in one of the aforementioned ways.

Thus "A" refers to a generic "mobile part" of the electric motor EA, which prevents the pump handling. Furthermore, in relation to the characteristics of the electric motor, EA may refer to a generic electric actuator, allowing to reach the purposes described here.

Advantageously, when the hub H of the pump HP has a faceted external surface, the action of the mobile part A of the electric actuator EA may be both of interference to every movement of the hub H and of interference to the engagement of the command wrench/lever of the hydraulic pump.

The circuit controlling the electric actuator EA may comprise a first switch S1, for example a bistable switch, placed in the cabin, and/or a second switch S2, operatively coupled with the radiator grill, which gives the consent to the retraction of the mobile part A of the electric actuator EA, when the radiator grill is open. Once the retraction has occurred, the pump can be operated.

On the contrary, when the radiator grill is closed, S2 switches its state (ON->OFF), bringing the actuator to extend its axis, namely in lock condition.

As an alternative, only the switch S2 is operatively coupled with the radiator grill, so that, once the radiator grill is opened, the mobile part A of the electric actuator EA is automatically retracted.

In other words, when S1 is present, it is connected in series, namely in AND, with S2.

Furthermore, the circuit is such that when the radiator grill GL is closed, the mobile part A of the electric actuator EA is automatically extended. In other words, by commuting the authorization signal, the consent/interference state of the electric actuator EA is commuted as well.

This, for example, may be realized by means of counteracting springs, or by means of a specific active command. The control of the actuator may be realized by means of a PLC on the basis of the input signal/s received by S1 and/or S2. As an alternative, the control/command may be performed directly by one of the vehicular control units.

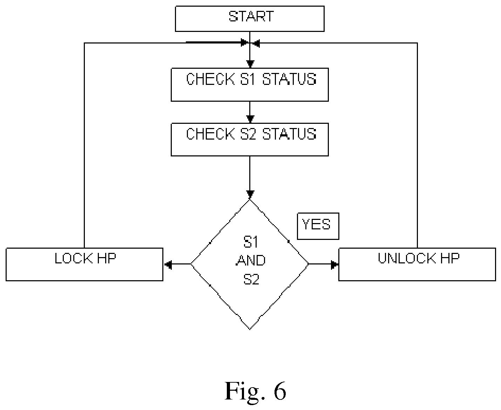

Figure 6 shows a logical diagram of the functioning of the system that is object of the present invention:
- optional step (check state S1): verification of the state of the switch S1, for example if it is a pressed button (ON);
- (check state S2): verification of the state of the switch S1, for example, when the radiator grill is open, close the switch S2 (ON);
- if S1 and S2 are closed (ON), unlock the hydraulic pump HP (UNLOCK HP), otherwise lock the hydraulic pump (LOCK HP) and restart from the beginning.

If S1 is not present, the control is performed only on S2. The present description refers to hydraulic pumps HP, in fact the present invention may be applied to any tilt means, provided that it is manual.

For example winches, windlasses, leverages, ecc..

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative embodiments of the invention can be conceived and reduced to practice without departing from the scope of the invention, as defined by the appended claims.

From the description set forth above it will be possible for the person skilled in the art to embody the invention with no need of describing further construction details. The elements and the characteristics described in the different preferred embodiments may be combined without departing from the scope of the present application.

## Claims

1. System for inhibiting the cabin tilt, the cabin comprising manual tilt means (HP) that can be operated by means of an operation wrench or lever (RD), said manual tilt means (HP) comprise a mobile part (H), suitable to be engaged by an operation wrench or lever (RD), the system being **characterized by** comprising means for detecting an authorization condition, i.e. ON or OFF, and locking means (A), whereby said locking means (A) are movable between a condition of consent and a condition of mechanical interference of the handling of said manual tilt means (HP) in relation to said condition of consent; said locking means (A) being suitable to switch their consent or interference condition when an authorisation condition switches, and in that said locking means (A), in condition of interference, are suitable to mechanically interfere with said mobile part (H).

2. System according to claim 1, wherein, when said cabin is equipped with an openable or removable radiator grill, said means for detecting the authorization condition comprise means (S2) for detecting that said radiator grill is open or removed, suitable to send an authorization signal to said locking means (A), so that when said radiator grill is open or removed said locking means are brought in condition of consent.

3. System according to one of the preceding claims 1 or 2, wherein said means for detecting the authorization condition comprise a first switch (S1) suitable to send an authorization signal to said locking means (A) when the switch (S1) is operated, so that said locking means are brought to a condition of consent.

4. System according to claim 1, wherein said locking means (A), in condition of interference, are suitable to prevent a movement of said mobile part (H).

5. System according to claim 1, wherein said locking means (A), in condition of interference, are suitable to prevent an engagement of said operation wrench or lever (RD) in said mobile part (H).

6. System according to one of the preceding claims from 1 to 5, wherein said locking means (A) comprise an axis or a flange or a cam.

7. System according to one of the preceding claims from 1 to 6, wherein said locking means (A) are controlled by an electric actuator (EA).

8. System according to one of the preceding claims from 1 to 7, wherein said manual tilt means (HP) comprise a hydraulic pump or a winch or a windlass or a leverage.

9. System according to one of the preceding claims from 2 to 8, wherein said means (S2) for detecting if said radiator grill is open or removed comprise a second switch (S2).

10. System according to one of the claims from 3 to 9, wherein the authorization signal of the first switch and of the second switch are in logical AND between each other.

11. Method for inhibiting the cabin tilt, the method comprising manual tilt means (HP) that can be operated by means of an operation wrench or lever (RD), said manual tilt means (HP) comprise a mobile part (H), suitable to be engaged by an operation wrench or lever (RD), the method comprising the steps of
- preparing of means for detecting an authorisation condition, i.e. on or off,
- preparing of locking means (A) movable between a condition of consent and a condition of mechanical interference of the handling of said manual tilt means (HP), said locking means (A) being suitable to switch their consent or interference condition when an authorisation condition switches,
the method being **characterized in**
- (i) driving of said locking means (A) in condition of mechanical interference until said condition of authorization is detected, so that said mechanical interference condition is suitable to mechanically interfere with said mobile part (H).

12. Method according to claim 11, wherein said cabin comprises an openable or removable radiator grill (GL) and wherein said means for detecting the authorization condition comprise means (S2) for detecting whether said radiator grill is open or removed,
said step (i) driving said locking means (A) in condition of mechanical interference until said radiator grill is not open or removed.

13. Industrial vehicle comprising a tilt cab and at least manual tilt means (HP) that can be operated by means of an operation wrench or lever (RD), **characterized in that** it comprises the inhibition system according to one of the claims from 1 to 10.

14. Industrial vehicle according to claim 13, further comprising control means suitable to realize the step (i) of the method according to one of the claims 12 or 13.

15. Computer-readable means comprising a recorded program, said computer-readable means comprising program code means suitable for performing the step (i) of one of the claims from 11 to 12, when said program is run on a computer.

## Patentansprüche

1. System zur Verhinderung des Kippens einer Kabine, welche Kabine manuelle Mittel zum Kippen (HP) umfasst, die durch einen Schraubenschlüssel oder Hebel (RD) betrieben werden können, welche manuellen Mittel zum Kippen (HP) einen mobilen Teil (H) umfassen, dazu geeignet mit einem Schraubenschlüssel oder Hebel (RD) in Eingriff zu kommen, welches System **dadurch gekennzeichnet ist, dass** es Mittel umfasst, um einen Autorisierungszustand zu erkennen, d.h. EIN und AUS, und Mittel zum Sperren (A) umfasst, wobei die Mittel zum Sperren (A) zwischen einem Konsenszustand und einem Zustand der mechanischen Störung der Handhabung der manuellen Mittel zum Kippen (HP) in Bezug auf den Konsenszustand einstellbar sind; wobei die Mittel zum Sperren (A) dazu geeignet sind, ihren Konsenszustand oder Zustand der Störung zu schalten, wenn ein Autorisierungszustand schaltet, und dadurch, dass die Mittel zum Sperren (A) im Zustand der Störung dazu geeignet sind, den mobilen Teil (H) mechanisch zu stören.

2. System gemäß Anspruch 1, wobei dann, wenn die Kabine mit einem zu öffnenden oder entfernbaren Kühlergrill ausgestattet ist, die Mittel zum Erkennen des Autorisierungszustandes Mittel (S2) umfassen, um zu erkennen ob der Kühlergrill offen oder entfernt ist, dazu geeignet ein Autorisierungssignal zu den Mitteln zum Sperren (A) zu senden, so dass dann, wenn der Kühlergrill geöffnet oder entfernt ist, die Mittel zum Sperren in einen Konsenszustand gebracht werden.

3. System gemäß einem der vorhergehenden Ansprüche 1 oder 2, wobei die Mittel zum Erkennen des Autorisierungszustandes einen ersten Schalter (S1) umfassen, dazu geeignet ein Autorisierungssignal zu den Mitteln zum Sperren (A) zu senden, wenn der Schalter (S1) bedient wird, so dass die Mittel zum Sperren in einen Konsenszustand gebracht werden.

4. System gemäß Anspruch 1, wobei die Mittel zum Sperren (A) in einem Zustand der Störung dazu geeignet sind, eine Bewegung des mobilen Teils (H) zu verhindern.

5. System gemäß Anspruch 1, wobei die Mittel zum Sperren (A) in einem Zustand der Störung dazu geeignet sind, den Eingriff des Schraubenschlüssels oder des Hebels (RD) in das mobile Teil (H) zu verhindern.

6. System gemäß einem der vorhergehenden Ansprüche 1 bis 5, wobei die Mittel zum Sperren (A) eine Achse, einen Flansch oder einen Nocken umfassen.

7. System gemäß einem der vorhergehenden Ansprüche 1 bis 6, wobei die Mittel zum Sperren (A) durch einen elektrischen Stellantrieb (EA) gesteuert werden.

8. System gemäß einem der vorhergehenden Ansprüche 1 bis 7, wobei die manuellen Mittel zum Kippen (HP) eine hydraulische Pumpe oder eine Winde oder eine Ankerwinde oder einen Hebelarm umfassen.

9. System gemäß einem der vorhergehenden Ansprüche 2 bis 8, wobei die Mittel (S2) zum Erkennen, ob der Kühlergrill geöffnet oder entfernt ist, einen zweiten Schalter (S2) umfassen.

10. System gemäß einem der vorhergehenden Ansprüche 3 bis 9, wobei das Autorisierungssignal des ersten Schalters und des des zweiten Schalters über ein logisches UND miteinander verknüpft sind.

11. Verfahren zur Verhinderung des Kippens der Kabine, welche Methode manuelle Mittel zum Kippen (HP) umfasst, die mittels eines Schraubenschlüssels oder eines Hebels (RD) bedient werden können, welche manuellen Mittel zum Kippen (HP) einen mobilen Teil (H) umfassen, geeignet für den Eingriff eines Schraubenschlüssels oder eines Hebels (RD), welche Methode folgende Schritte umfasst:
- Bereitstellung von Mitteln, um einen Autorisierungszustand zu erkennen, d.h. Ein oder Aus,
- Bereitstellung von Mitteln zum Sperren (A), einstellbar zwischen einem Konsenszustand und einem Zustand der mechanischen Störung der Handhabung der manuellen Mittel zum Kippen (HP), welche Mittel zum Sperren (A) dazu geeignet sind, ihren Konsenszustand oder Zustand der Störung zu schalten, wenn ein Autorisierungszustand schaltet, welche Methode **dadurch gekennzeichnet ist, dass**
- (i) die Mittel zum Sperren (A) in einen Zustand der mechanischen Störung gestellt werden, bis ein Autorisierungszustand erkannt wird, so dass der Zustand der mechanischen Störung dazu geeignet ist, das mobile Teil (H) mechanisch zu stören.

12. Methode gemäß Anspruch 11, wobei die Kabine einen zu öffnenden oder entfernbaren Kühlergrill (GL) umfasst und wobei die Mittel zum Erkennen des Autorisierungszustandes Mittel (S2) umfassen, zum Erkennen ob der Kühlergrill geöffnet oder entfernt ist, wobei Schritt (i) die Mittel zum Sperren (A) in einen Zustand der mechanischen Störung stellt, bis der Kühlergrill nicht offen oder entfernt ist.

13. Gewerbliches Fahrzeug umfassend eine kippbare Kabine und mindestens manuelle Mittel zum Kippen (HP), die mittels eines Schraubenschlüssels oder Hebels (RD) bedient werden, **dadurch gekennzeichnet, dass** das Fahrzeug ein Verhinderungssystem gemäß einem der Ansprüche 1 bis 10 umfasst.

14. Gewerbliches Fahrzeug gemäß Anspruch 13, weiter umfassend Steuermittel, dazu geeignet den Schritt (i) des Verfahrens gemäß einem der Ansprüche 12 oder 13 zu realisieren.

15. Computer-lesbare Mittel umfassend ein aufgezeichnetes Programm, welche Computer-lesbaren Mittel Programmcode-Mittel umfassen, dazu geeignet den Schritt (i) in einem der Ansprüche 11 oder 12 auszuführen, wenn das Programm auf einem Computer ausgeführt wird.

## Revendications

1. Système empêchant le basculement d'une cabine, la cabine comprenant un moyen de basculement manuel (HP) qui peut être actionné au moyen d'une clé d'actionnement ou d'un levier (RD), ledit moyen de basculement manuel (HP) comprenant une partie mobile (H), adaptée pour être engagée avec une clé d'actionnement ou un levier (RD), le système étant **caractérisé en ce qu'**il comprend un moyen de détection d'une condition d'autorisation, c'est-à-dire ON ou OFF, et un moyen de verrouillage (A), moyennant quoi ledit moyen de verrouillage (A) peut passer d'une condition de consentement à une condition de perturbation mécanique de la manipulation dudit moyen de basculement manuel (HP) en lien avec ladite condition de consentement ; ledit moyen de verrouillage (A) étant adapté pour changer sa condition de consentement ou de perturbation lorsqu'une condition d'autorisation est enclenchée, et étant **caractérisé en ce que** lequel ledit moyen de verrouillage (A), dans une condition de perturbation, convient pour perturber mécaniquement ladite partie mobile (H).

2. Système selon la revendication 1, dans lequel, lorsque ladite cabine est équipée d'une calandre de radiateur ouvrable ou amovible, ledit moyen de détection de condition d'autorisation comprend un moyen (S2) destiné à détecter que ladite calandre de radiateur est ouverte ou retirée, adapté pour envoyer un signal d'autorisation audit moyen de verrouillage (A), de sorte que, lorsque ladite calandre de radiateur est ouverte ou retirée, ledit moyen de verrouillage soit amené en condition de consentement.

3. Système selon l'une quelconque des revendications précédentes 1 ou 2, dans lequel ledit moyen de détection de condition d'autorisation comprend un premier commutateur (S1) adapté pour envoyer un signal d'autorisation audit moyen de verrouillage (A) lorsque le commutateur (S1) est actionné, de sorte que ledit moyen de verrouillage soit amené en condition de consentement.

4. Système selon la revendication 1, dans lequel ledit moyen de verrouillage (A), en condition de perturbation, est adapté pour empêcher un mouvement de ladite partie mobile (H).

5. Système selon la revendication 1, dans lequel ledit moyen de verrouillage (A), en condition de perturbation, est adapté pour empêcher un engagement de ladite clé d'actionnement ou dudit levier (RD) dans ladite partie mobile (H).

6. Système selon l'une quelconque des revendications précédentes 1 à 5, dans lequel ledit moyen de verrouillage (A) comprend un axe ou une bride ou une came.

7. Système selon l'une quelconque des revendications précédentes 1 à 6, dans lequel ledit moyen de verrouillage (A) est contrôlé par un actionneur électrique (EA).

8. Système selon l'une quelconque des revendications précédentes 1 à 7, dans lequel ledit moyen de basculement manuel (HP) comprend une pompe hydraulique ou un treuil ou un cabestan ou un levier.

9. Système selon l'une quelconque des revendications précédentes 2 à 8, dans lequel ledit moyen (S2) de détection du fait que ladite calandre de radiateur soit ouverte ou retirée comprend un second commutateur (S2).

10. Système selon l'une quelconque des revendications 3 à 9, dans lequel le signal d'autorisation du premier commutateur et du second commutateur comprennent un ET logique entre eux.

11. Procédé empêchant le basculement d'une cabine, le procédé comprenant un moyen de basculement manuel (HP) qui peut être actionné grâce à une clé d'actionnement ou un levier (RD), ledit moyen de basculement manuel (HP) comprend une partie mobile (H), adaptée pour être engagée par une clé d'actionnement ou un levier (RD), le procédé comprenant les étapes consistant à
- préparer un moyen de détection d'une condition d'autorisation, c'est-à-dire ON ou OFF,
- préparer un moyen de verrouillage (A) mobile entre une condition de consentement et une condition de perturbation mécanique de la manipulation dudit moyen de basculement manuel (HP), ledit moyen de verrouillage (A) étant adapté pour changer sa condition de consentement ou de perturbation lorsqu'une condition d'autorisation est déclenchée,
le procédé étant **caractérisé par**
- (i) l'entraînement dudit moyen de verrouillage (A) dans la condition de perturbation mécanique jusqu'à ce que ladite condition d'autorisation soit détectée, de sorte que ladite condition de perturbation mécanique soit adaptée pour perturber mécaniquement ladite partie mobile (H).

12. Procédé selon la revendication 11, dans lequel ladite cabine comprend une calandre de radiateur (GL) ouvrable ou amovible, et dans lequel ledit moyen de détection de la condition d'autorisation comprend un moyen (S2) destiné à détecter si ladite calandre de radiateur est ouverte ou retirée,
ladite étape (i) entraînant ledit moyen de verrouillage (A) dans une condition de perturbation mécanique jusqu'à ce que ladite calandre de radiateur ne soit plus ouverte ou retirée.

13. Véhicule industriel comprenant une cabine inclinable et au moins un moyen de basculement manuel (HP) qui peut être actionné par une clé d'actionnement ou un levier (RD), **caractérisé en ce qu'**il comprend le système d'inhibition selon l'une quelconque des revendications 1 à 10.

14. Véhicule industriel selon la revendication 13, comprenant en outre un moyen de commande adapté pour exécuter l'étape (i) du procédé selon l'une des revendications 12 ou 13.

15. Moyen lisible par un ordinateur comprenant un programme enregistré, ledit moyen lisible par un ordinateur comprenant un moyen de code de programme adapté pour exécuter l'étape (i) de l'une des revendications 11 à 12, lorsque ledit programme est exécuté sur un ordinateur.
